(19) **Europäisches Patentamt**

**European Patent Office**

**Office européen des brevets**

(11) **EP 0 949 493 A1**

(12) **EUROPÄISCHE PATENTANMELDUNG**

(43) Veröffentlichungstag:
**13.10.1999 Patentblatt 1999/41**

(51) Int. Cl.⁶: **G01L 1/22**, G01L 5/00,
G01L 5/10

(21) Anmeldenummer: **98122886.9**

(22) Anmeldetag: **02.12.1998**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **02.04.1998 US 53800**

(71) Anmelder:
**Cleveland Motion Controls, Inc.
Cleveland, Ohio 44125-5794 (US)**

(72) Erfinder: **Callendrier, Thierry
Middleburg Heights, Ohio 44130 (US)**

(74) Vertreter:
**Hennicke, Ernst Rüdiger,Dipl.-Ing.
Patentanwälte
Buschhoff Hennicke Vollbach,
Postfach 19 04 08
50501 Köln (DE)**

(54) **Kraftaufnehmer des doppelbalkentyps**

(57)   Die erfindungsgemäße Meßaufnehmereinrichtung zum Ermitteln der auf eine Welle oder Achse einer bestimmten Länge wirkenden Radialkräfte weist zwei in Zwillingsanordnung etwa parallel zur Wellenachse (X) angeordnete Meßbalken auf, die an ihrem einen Ende fest an einem Tragrahmen angeordnet sind und an ihrem anderen Ende über ein beide Meßbalken starr miteinander verbindendes Kopplungselement die Welle bzw. Achse tragen. An wenigstens einem der Meßbalken sind Dehnungsmeßstreifen angeordnet und elektrisch so verschaltet, daß sie die auf die Achse bzw. Welle wirkenden Radialkräfte unabhängig von der Länge der Achse bzw. Welle messen können. Die erfindungsgemäße Meßaufnehmereinrichtung ist besonders geeignet für ihren Einsatz bei der Bestimmung der Spannkräfte für einen sich bewegenden Streifen, beispielsweise ein Gewebeband.

FIG. I

**Beschreibung**

Die Erfindung betrifft im wesentlichen eine Überwachungsvorrichtung zum Messen und Anzeigen der Spannung in einem sich kontinuierlich bewegenden Streifen und insbesondere eine Vorrichtung zum Erkennen der Spannung in sich schnell bewegenden Bändern oder Streifengeweben und zum Erzeugen eines Signals in Bezug auf eine solche Spannung.

Diese Erfindung betrifft Verbesserungen der Meßwertaufnehmer, wie sie beispielsweise in den US-Patenten 3,260,106; 3,763,701; 4,052,891; 4,281,539; 4,326,424; Re. 31,312; 4,674,341; 4,735,102; 4,784,004; 4,796,474 beschrieben sind, die hiermit ausdrücklich zum Gegenstand der Offenbarung der vorliegenden Anmeldung gemacht werden.

Bei Verfahren bzw. Einrichtungen, bei denen ein Band oder ein Streifen aus flexiblem Material wie zum Beispiel einem Gewebe aus Textil, ein Papier- oder Metallstreifen kontinuierlich mit hoher Geschwindigkeit wenigstens teilweise um eine Führungsrolle herumgeführt wird, die entweder fest oder beweglich auf einer Welle bzw. Achse gelagert ist, ist es bekannt, ein oder beide Wellenenden auf einen Meßdatenaufnehmer aufzulegen, der in der Lage ist, Quer- oder Radialkräfte zu messen, die auf die Rolle durch die Spannung in dem sich bewegenden Streifen wirken. Die Streifenspannung kann damit stetig korrigiert werden und zwar entweder manuell oder mittels einer automatischen Kontrolleinrichtung in Abhängigkeit der fortlaufend durchgeführten Bandspannungsmessungen. Diese bekannten Spannungsmeßeinrichtungen bestehen üblicherweise im wesentlichen aus einem Sensor in Form eines einseitig eingespannten Spannungsmeßbalkens, der an einem festen Rahmen befestigt ist und dessen freies, auslenkbares Ende mit einem Ende der Führungsrollenwelle entweder über ein biegbares Stahldiaphragma oder eine drehbare Verbindung, wie beispielsweise ein selbsteinstellendes Lager gekoppelt ist und diese trägt. An dem Spannungsbalken festgelegte und in einem elektrischen Stromkreis eingeschaltete Dehnungsmeßgeräte erzeugen dann kontinuierlich ein elektrisches Signal, das ein Maß für die Balkenauslenkung durch die Gewebespannungskräfte darstellt, die aus der Momentanenspannung im sich bewegenden Streifen resultieren. Viele dieser Meßeinrichtungen sind schon bei kleinen Kraftänderungen verhältnismäßig empfindlich, so daß es in ihrem Ansprechverhalten (response curve) zu einer unerwünschten Hystereseschleife kommt. Die Ursache hierfür ist in der Reibung in der angelenkten oder gelenkigen Verbindung zwischen der Achse und der beweglichen Auflagerplatte zu sehen. Wenn die Spannung im Streifen bzw. Band ansteigt, biegt sich der Balken, was dazu führt, daß seine verlängerte Achse relativ von der Walzenachse abweicht, wobei die Abweichung von der gelenkigen Verbindung aufgenommen wird. Unerwünschte Reibung in dieser Verbindung erzeugt ein Kräftepaar, das bei größer werdender Spannung im Streifen der Durchbiegung des Balkens entgegensteht und daher die auf das Dehnungsmeßgerät ausgeübten Verformungen verringert, wodurch auch das resultierende Spannungssignal kleiner ist als die tatsächlich herrschende Spannung. Wenn die Spannung in dem Streifen abnimmt und der Balken entlastet wird, erzeugt das Reibungskräftepaar in der gelenkigen Verbindung ein Kräftepaar, das in die entgegengesetzte Richtung wirkt und das einen Anstieg des resultierenden Spannungssignals bewirkt. Der Unterschied zwischen diesen Signalen führt zu einer Hystereseschleife der Antwortkurve, die den Sensor ungeeignet für extrem kritische Anwendungen macht.

Um dieses Problem zu überwinden, wurde ein Sensor vorgeschlagen, der ein Paar parallele, beabstandet voneinander angeordnete Arme oder Balken aufweist, die an einem Ende einstückig mit einer Grundplatte und am anderen Ende mit der Auflagerplatte verbunden sind, wobei die Auflagerplatte dann die Achse der Streifenumlenkwalze trägt. Wenn dieser Doppelbalkensensor belastet wird, bleibt die verlängerte Achse der Auflagerplatte (die Plattennormale) parallel zu der unbelasteten Achse und es entsteht daher kein Kräftepaar aufgrund der Durchbiegung der Balken. Mit dieser Anordnung ist es daher möglich, auf eine aufwendige und teure Lagerung und eine starre Verbindung zwischen Welle und Sensor zu verzichten. Obwohl derartige Vorrichtungen eine Verbesserung darstellten, verblieb manchmal eine Hystereseschleife. Insbesondere bei langen Umlenk- oder Führungswalzen kann es nämlich dazu kommen, daß die Achse der Walze über ihre Länge durch die Streifenspannungskräfte gebogen oder gekrümmt wird, so daß ihre verlängerte Achse nicht länger parallel zur Plattennormale der Auflagerplatte ist. Dies setzt dann einen der Balken unter Zugspannung in seiner Längsrichtung und den anderen unter Längsdruck, wobei die Kräfte das Dehnungsmeßgerät in der gleichen Weise wie die oben beschriebenen Biegungskräfte beeinflussen und dadurch ungenaue Ergebnisse und eine Hystereseschleife zur Folge haben. Darüberhinaus ist es mit dieser Anordnung schwierig, die Versetzungen der Welle und/oder die Ausdehnungen oder Kontraktionen derselben aufzunehmen.

Aus den US-PS 4,326,424, US-PS 4,674,341 und der US-PS 4,796,474 sind Verbindungsanordnungen für die Welle bekannt, die viele dieser Probleme lösen. Obwohl diese Streifenspannungssensoreinrichtungen die Herstellung und Konstruktion derartiger Einrichtungen deutlich vereinfacht und die Probleme, die mit Hysterese, Wellenausdehnung und Walzenversatz verbunden sind, wesentlich verringert haben, erfordern diese Einrichtungen alle eine auf den Kunden abgestimmte Einzelanfertigung für den bestimmten Einsatzzweck. Der Grund hierfür liegt darin, daß die richtige Auswahl der die radialen, auf die Welle wirkenden Kräfte abtastenden Einrichtungen von der Länge der Welle abhängt. Daher muß jede der Sensoreinrichtungen nach Maß gefertigt und für eine bestimmte Anwendung entworfen sein.

Aufgabe der Erfindung ist es, eine neue und verbesserte Streifenspannungsmeßeinrichtung zu schaffen, die besonders einfach aufgebaut ist und aus möglichst wenigen, einfach und günstig herstellbaren Teilen besteht, die leicht zu montieren und zu demontieren sind, wobei die Einrichtung die auf die Achsen von Umlenk- oder Führungswalzen unterschiedlicher Bauart einwirkenden Radialkräfte messen kann. Diese Aufgabe wird mit der Erfindung durch eine Meßwertaufnehmereinrichtung der in den Ansprüchen angegebenen Art gelöst.

Der mit der Erfindung vorgeschlagene, neue und verbesserte Sensor für einen sich bewegenden Streifen bzw. die neue Meßdatenaufnehmereinrichtung überwindet die vorstehend genannten Probleme. Mit der Erfindung wird eine Streifen- oder Bandspannungsanordnung geschaffen, mit der es möglich ist, unabhängig von der Länge der belasteten Welle die Streifen- bzw. Bandspannung zu überwachen und zu messen. Die Streifenspannungsanordnung stellt eine Spannungsüberwachungs- und -meßeinrichtung bereit, die vergleichsweise einfach und leicht herzustellen und zusammenzusetzen ist und die eine außergewöhnlich geringe Hysterese sowie die Fähigkeit besitzt, die Wellenausdehnung und einen Führungsrollenversatz aufzunehmen bzw. zu kompensieren, ohne die Genauigkeit der Spannungsmessungen nennenswert zu beinträchtigen.

Mit der Erfindung wird eine Dehnungsbalkensensoranordnung für die Walze einer Streifenumlenkeinrichtung geschaffen, mit einem Meßwertaufnehmer vom Doppelbalkentyp, der eine Grundplatte aufweist, die so ausgestaltet ist, daß sie am Rahmen der Streifenhandhabungsvorrichtung festgelegt werden kann. Der Meßwertaufnehmer hat ferner eine bewegliche Platte, an der die Achse der Gewebewalze gelagert ist. Der Doppelbalkenmeßaufnehmer hat mindestens einen Dehnungsmeßaufnehmer, der auf wenigstens einem der Balken befestigt ist. Der oder die Dehnungsmeßaufnehmer ist/sind in einen elektrischen Stromkreis geschaltet und dienen dazu, die auf die Achse der Streifenwalze wirkenden Radialkräfte unabhängig von der Länge der Achse zu bestimmen.

Der Meßwertaufnehmer vom Doppelbalkentyp nach der Erfindung weist ein Paar längliche, voneinander beabstandete Balkenelemente auf, die vorzugsweise symmetrisch zur Achse der Band- bzw. Streifenwalze ausgerichtet sind. In besonders vorteilhafter Ausgestaltung sind die Dehungsbalkenelemente spiegelsymmetrisch zueinander angeordnet, und zwar zweckmäßig im wesentlichen parallel zueinander. In einer besonders bevorzugten Ausführungsform sind die Balkenelemente vorzugsweise aus einem Sensorbalkenblock herausgearbeitet, indem darin mehrere Bohrlöcher gebohrt sind, die sich vollständig von einer Seite zur anderen durch das Blockelement erstrecken und dabei zueinander parallel und einander überlappend aneinander angrenzen. Die Balkenelemente liegen dabei vollständig innerhalb der Grenzen des Blockelements in symmetrischer Form und Anordnung auf gegenüberliegenden Seiten der Mittelachse des Blockelements und bilden zwischen sich eine vollständig ausgebohrte innere Passage, die sich in Querrichtung bis dicht an die Ober- und Unterseite des Blockelementes erstreckt, um so das Paar von beabstandeten Dehnungsbalkenelementen zu formen.

In weiterer Ausgestaltung der Erfindung weist der Dehnungsbalken des Meßdatenaufnehmers ein Paar sich im wesentlichen parallel erstreckende, im Abstand voneinander angeordnete Balkenelemente auf, wobei mindestens ein Balkenelement mit mehreren Sensoren zur Dehnungsmessung an dem Balkenelement versehen ist. Vorzugsweise hat das Balkenelement zwei Sensoren. In Weiterbildung der Erfindung sind beide Balkenelemente des Dehnungsbalkens mit zwei Sensoren zum Messen der Dehnung an beiden Balkenelementen versehen.

Vorzugsweise ist die Führungsrollentragwelle bzw. -achse am biegbaren Ende des Dehnungsbalken über eine starre Verbindung ohne besondere Lager festgelegt.

Mit der Erfindung wird eine Streifen- oder Bandspannungsmeßeinrichtung geschaffen, die unabhängig von der Länge der Walze die radialen Kräfte messen kann, die auf die Achse einer Walze wirken.

In vorteilhafter Ausgestaltung wird mit der Erfindung eine neue Form einer Dehnungsbalkenkonstruktion des Doppelbalkentyps für den Gebrauch in einer Streifenspannungsmeßeinrichtung bereitgestellt, die einfach und preiswert herzustellen ist.

Zweckmäßig kann die erfindungsgemäße Dehnungsbalkeneinrichtung oder Meßdatenaufnehmervorrichtung zum Messen der Band- bzw. Streifenspannung mit einem universell einsetzbaren Gehäuse versehen sein, das vorzugsweise leicht für die Montage verschiedener Formen solcher Meßdatenaufnehmervorrichtungen an viele verschiedene Typen von Unterstützungsrahmen oder Befestigungselementen angepaßt werden kann.

Weitere Merkmale und Vorteile der Erfindung ergeben sich aus der nachfolgenden, ausführlichen Beschreibung und der Zeichnung, worin eine bevorzugte Ausführungsform der Erfindung an einem Beispiel näher erläutert wird. Es zeigt:

Fig. 1      eine perspektivische Teilansicht einer Anordnung zum Überwachen der Spannung in einem sich bewegenden Streifen nach der Erfindung;

Fig. 2      das eine Ende der Streifenspannungsmeßeinrichtung nach der Erfindung in einem vergrößerten Vertikalschnitt;

| | |
|---|---|
| Fig. 3 | eine schematische Darstellung der in der Anordnung gem. Fig.2 auftretenden Kräfte; |
| Fig. 4A-B | schematische Darstellungen der Biege- und Druckbelastungen, die auf den Sensor nach der Erfindung wirken; |
| Fig. 5A-B | Schaltbilder für die elektrische Verschaltung der in Fig. 2 gezeigten Dehnungsmeßelemente mit einer Monitoreinheit; und |
| Fig. 6A-H | verschiedene Anordnungen der Dehnungsmeßelemente und ihre entsprechenden Verschaltungen mit der Monitoreinheit. |

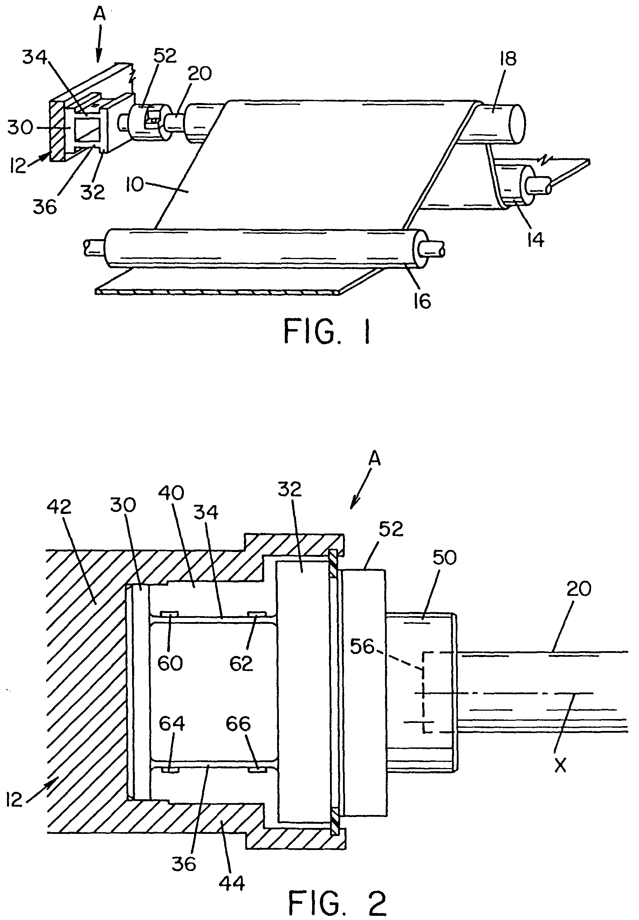

In Fig. 1 ist mit 10 ein Band oder Streifen bezeichnet, das bzw. der kontinuierlich in Längsrichtung durch eine Bandhandhabungsvorrichtung bewegt wird. Die Handhabungsvorrichtung weist einen Rahmen 12 auf, in dem zwei zueinander parallel verlaufende Leitrollen 14, 16 im Abstand voneinander gelagert sind, wobei sie in einer gemeinsamen horizontalen Ebene liegen. Im Rahmen 12 ist ferner eine den Streifen 10 unter Spannung setzende Führungswalze oder -rolle 18 angeordnet, die im wesentlichen parallel zu den Leitrollen 14 und 16 und zwischen diesen angeordnet ist, jedoch gegenüber diesen ein Stück weit nach oben versetzt ist, so daß der Streifen 10, wenn er über die Führungsrolle 18 läuft, aus seiner normalen Laufebene, die parall zu der von den Leitrollen 14, 16 aufgespannten Ebene ist, ausgelenkt wird, wie dies in Fig. 1 gut zu erkennen ist. Dabei umschlingt der Streifen oder das Band 10 die Führungswalze 18 über einen Teil von deren Umfang. Infolge der in dem Streifen 10 herrschenden Spannung wird die Führungsrolle 18 mit einer Kraft nach unten gedrückt, die zwischen den beiden Leitrollen 14 und 16 wirkt und die eine Richtung hat, die von dem durch das Band bei seinem Lauf über die Führungsrolle 18 aufgespannten Winkel abhängt. Bei einer Anordnung, bei der die Führungsrolle 18 von den beiden Leitrollen 14 und 16 einen gleichgroßen Abstand hält, wirkt daher die durch das gespannte Band ausgeübte Kraft senkrecht nach unten gegen die Führungsrolle 18, während bei unterschiedlichen Abständen zwischen der Führungsrolle und den beiden Leitrollen die vom Band auf die Führungsrolle ausgeübte Kraft auch eine Horizontalkomponente hat. Die Gewebehandhabungsvorrichtung ist als solche bekannt und daher hier lediglich mit den Teilen dargestellt, die für die vorliegende Erfindung von Bedeutung sind.

Die Führungsrolle 18 ist endseitig an einer Tragwelle bzw. -achse 20 gelagert, die quer zum seitlichen Rahmenteil 12 in der Vorrichtung angeordnet ist und sich parallel zu den Leitrollen 14, 16 erstreckt. Die Tragwelle ist an ihrem Ende an dem seitlichen Rahmenteil 12 unter Zwischenlage einer Kraftmeßeinrichtung bzw. einer Meßwertaufnehmereinrichtung A angeschlossen, die Gegenstand der vorliegenden Erfindung ist.

Fig. 2 zeigt die erfindungsgemäße Meßwertaufnehmereinrichtung A mehr im einzelnen. Die dargestellte Ausführungsform der Meßwertaufnehmereinrichtung kann auch als Sensorbalkenelement bezeichnet werden, das eine erste Basisendplatte 30 und eine zweite Basisendplatte 32 hat, die untereinander durch ein Paar paralleler, im Abstand voneinander angeordneter Arme 34, 36 verbunden sind. Die beiden parallelen Arme 34, 36 können wie bei der dargestellten Ausführungsform als dünne Platten ausgestaltet sein, die mit ihren Flachseiten parallel zueinander in einem Vertikalabstand voneinander an den beiden Basisplatten 30, 32 befestigt sind. Dabei ist die Anordnung vorzugsweise so getroffen, daß der Abstand der parallelen Arme 34, 36 von der Achse der Tragwelle 20 im unbelasteten Zustand der Vorrichtung gleich groß ist. Die Arme 34, 36 sind an den Basisplatten 30, 32 mit ihren Enden in geeigneter Weise befestigt, beispielsweise durch eine Schweißverbindung, durch Bolzen, Schrauben oder - wie dargestellt - sie bilden mit den Platten 30 und 32 ein einstückiges Bauteil.

Wie am besten aus Fig. 2 erkennbar ist, sind die Platten 30, 32 und die Arme 34, 36 in einer zylindrischen, einseitig offenen Kammer 40 in einem etwa becherartig ausgestalteten Gehäuse 42 aufgenommen. Dabei ist die Platte 30 vorzugsweise in geeigneter Weise fest mit dem Gehäuse 42 verbunden, beispielsweise durch eine Schweißverbindung, einen oder mehrere Bolzen, Schrauben od.dgl.. Das Gehäuse 42 wiederum ist am Maschinenrahmen 12 der Vorrichtung durch Schweißen, Bolzen, Schrauben od.dgl. so befestigt, daß die Öffnung der Kammer 40 in Richtung auf das eine Ende der Führungsrollentragwelle 20 weist.

Die Arme 34, 36 in dem Gehäuse 42 bilden Dehnungsbalken oder Brückenabschnitte, die bei der gewählten Befestigung des Gehäuses 42 an dem Rahmen 12 flache, etwa horizontale Flächen bilden, die parallel auf gegenüberliegenden Seiten zu der Wellenachse X der Führungsrollentragwelle 20 in deren unbelastetem Zustand ausgerichtet sind, so daß sie etwa normal zur Richtung der Kräfte verlaufen, die auf die Führungsrolle 18 und deren Tragwelle 20 infolge der in dem sich bewegenden Streifen 10 herrschenden Spannung wirken. Bei einer Anordnung, bei der die Bandspannungskräfte eine senkrecht nach unten auf die Führungsrolle 18 wirkende Kraft erzeugen sollen, ist daher das Gehäuse 42 so an dem Rahmen 12 befestigt, daß die als Dehnungsbalken oder Brückenabschnitte wirkenden Arme 34, 36 der Meßfühlereinrichtung flach in annähernd parallen horizontalen Ebenen angeordnet sind.

Die Arme oder Dehnungsmeßträger 34, 36 sind mit ihren Befestigungsenden an der festen Basisendplatte 30 auskragend angebracht, so daß ihre anderen Enden ungehindert versetzt oder nach unten ausgelenkt werden können, wenn auf die bewegliche Platte 32 Kräfte einwirken, die von den nach unten gerichteten Kräften verursacht werden, die auf die Führungsrollenwelle 20 infolge der in dem Streifen 10 herrschenden Spannung wirken. Je größer die auf die bewegliche Platte 32 wirkenden, nach unten gerichteten Kräfte werden, desto größer werden die Zugspannungen an den oberen Oberflächen der Dehnungsmeßbalken 34, 36 in der Nähe der Basisendplatte 30, während gleichzeitig an den gegenüberliegenden, unteren Oberflächen der Dehnungsmeßbalken 34, 36 in der Nähe von deren Basisendplatte 30 die Druckspannungen zunehmen. Wenn andererseits die nach unten gerichteten, auf die bewegliche Platte 32 ausgeübten Kräfte abnehmen, verringern sich auch die Zugspannungen an den Oberseiten der Dehnungsmeßbalken 34, 36 und die Druckspannungen an deren Unterseite in der Nähe der Basisendplatte 30.

Wie aus Fig. 2 gut erkennbar ist, hat die Endplatte 32 einen etwas kleineren Durchmesser als die in dem Gehäuse 42 ausgebildete Zylinderkammer 44, so daß zwischen den beiden Teilen ein kleiner Freiraum bleibt, der in gewissen Grenzen eine Ausschlagbewegung der Sensorbalkenelemente 34, 36 und der vorderen Endplatte 32 gestattet, wenn auf die Führungsrollentragwelle 20 Kräfte infolge der Bandspannung wirken. Die Wandung der Gehäusekammer oder Bohrung 40 dient dabei als starrer mechanischer Anschlag beim Betrieb der Vorrichtung, an den sich die bewegliche Endplatte 32 mit ihrem Umfang anlegen kann, wodurch verhindert wird, daß die Dehnungsmeßbalken 34, 36 zu weit nach unten ausgelenkt und dadurch überlastet und möglicherweise plastisch verformt werden.

Die Tragwelle 20 ist an ihrem Wellenende 56 in einer Befestigungsanordnung aufgenommen, die bei dem bevorzugten Ausführungsbeispiel im wesentlichen aus einer becherartigen Endaufnahme 50 besteht, die wiederum an einem Flansch 52 angeordnet ist und von diesem in Axialrichtung in Richtung auf das Wellenende 56 vorragt. Das Wellenende ist in der Endaufnahme 50 mit einem geeigneten Verbindungselement gesichert. Der Flansch 52 wiederum ist mit der Platte 32 fest verbunden, beispielsweise durch eine Schweißverbindung, durch Bolzen, Schrauben od. dgl.. Durch diese Anordnung der in der Aufnahme 50 gelagerten Welle bzw. Achse 20 liegt diese auf der Meßwertaufnehmereinrichtung A auf.

Wie sich aus der vorstehenden Beschreibung ergibt, wird durch die einfache Anordnung eine aufwendige und damit relativ teure maschinelle Bearbeitung überflüssig, die bei bislang für den besonderen Verwendungszweck der Vorrichtung eingesetzten Anordnungen notwendig war. Insbesondere ist es mit der Erfindung überflüssig, aus einem Metallblock vollständig den inneren Teil herauszuarbeiten, um die beiden Balkenelemente 34, 36 herzustellen, d.h., die Meßwertumwandlungseinrichtung A aus einem Teil herzustellen. Dies bedeutet, daß Teile der Meßwertwandlereinheit A aus Metall und/oder aus Kunststoff hergestellt werden können. Vorzugsweise werden die Einzelteile aus einem geeigneten Metallmaterial gefertigt, beispielsweise aus Aluminium und/oder aus Stahl.

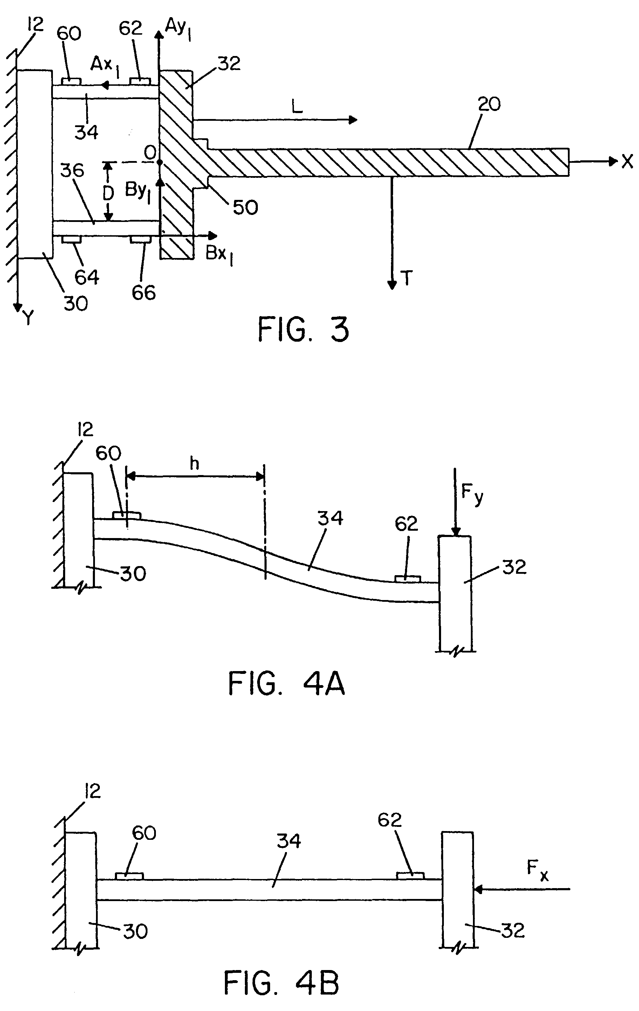

Bei dem dargestellten Ausführungsbeispiel der Erfindung bilden die Arme oder Dehnungsmeßbalken 34, 36 ein Zwillingsauflager für die bewegliche Endplatte 32, so daß diese relativ zu der feststehenden Basisendplatte 30 und etwa parallel zu dieser beweglich ist. Die Dehnungsmeßbalken 34, 36 sind so elastisch bzw. biegbar, daß sie eine Verschiebung der Endplatte 32 parallel zur Endplatte 30 quer zur Wellenachse X der Tragwelle und der damit zusammenfallenden Achse der Aufnahme 50 gestatten, wozu es kommt, wenn infolge der in dem umlaufenden Streifen 10 herrschenden Spannungen die daraus resultierenden Reaktionskräfte von der Führungsrolle 18 und der zugehörigen Tragwelle 20 in das von der Meßwertaufnehmereinrichtung A gebildete Auflager abgetragen werden müssen. Die von dem Streifen 10 auf die Welle 20 ausgeübte Kraft ist vertikal abwärts gerichtet und wird durch die Lagerung des Wellenendes in die Platte 32 eingeleitet, was dazu führt, daß sich die Dehnungsmeßbalken 34, 36 leicht S-förmig verbiegen, wie dies übertrieben in Fig. 4A dargestellt ist. Da der Abstand der Arme 34, 36 voneinander im Verhältnis zu ihrer Länge verhältnismäßig groß ist, bei dem in Fig. 2 dargestellten Ausführungsbeispiel der Abstand zwischen den beiden Armen 34, 36 tatsächlich größer als deren Länge ist, wird die bewegliche Endplatte 32 bei ihrer vertikalen Verschiebung infolge der auf sie ausgeübten Kraft quer zur Wellenachse X durch die beiden Arme 34 und 36 parallel zur fest am Maschinenrahmen angeordneten Endplatte 30 bewegt. Die auf die Arme 34, 36 ausgeübten Kräfte belasten diese nie über ihre elastische Grenze hinweg, so daß sie sich immer als weitgehend ideale Auslegerfedern oder eingespannte Federn verhalten und der Betrag der Verschiebung der Platte 32 proportional zu der auf sie ausgeübten Kraft in Vertikalrichtung ist.

Bei dem dargestellten Ausführungsbeispiel sorgen die Arme 34, 36 also zum einen für einen festen Anschluß der Platte 32 an der Platte 30 und bilden zum anderen elastisch flexible Verbindungen, die es der Platte 32 ermöglichen, sich parallel zur festgehaltenen Endplatte 30 und quer zur Achse der Tragwelle 20 zu verschieben, wenn die infolge der im Streifen herrschenden Spannung auftretenden Reaktionskräfte auf sie einwirken. Wie sich aus Fig. 3 ergibt, übt das Band dabei eine vertikal nach unten gerichtete Kraft T aus, die in der Zeichnungsebene Y liegt, wobei diese Kraft auf die Platte 32 über eine steife Verbindung, nämlich die Lagerung 50, 56 eingebracht wird und zur Folge hat, daß sich die Arme 34, 36 ähnlich wie in Fig. 4A dargestellt verbiegen.

Wie am besten aus Fig. 3 hervorgeht, bewirkt die von den Armen 34, 36 gebildete Zwillings- oder Doppelbalkenlagerung der Platte 32, daß die Achse des Flansches 52 bei dessen Abwärtsbewegung infolge der aufgenommenen Bandspannungskräfte nicht verbogen wird, sondern sowohl im belasteten als auch unbelasteten Zustand immer parallel bleibt. Dies ist besonders bedeutsam, wenn man sich vor Augen führt, daß die Tragwelle 20, auf der die Rolle 18 drehbar gelagert ist, sich unter der Bandspannung verbiegt. Dies hat zur Folge, daß die Achse der Welle 20 im belasteten Zustand nicht parallel zur Achse des Flansches 52 verläuft, wodurch auf den Flansch 52 ein Moment ausgeübt und ein Kräftepaar erzeugt wird, unter dessen Wirkung die Endplatte 32 normalerweise aus ihrer vertikalen Lage schräg gekippt würde. Da die Platte 32 jedoch an zwei voneinander beabstandeten Punkten festgelegt ist, bleibt sie auch bei einem hohen, von dem Flansch aufzunehmenden Moment parallel zu der Lage, die sie im unbelasteten Zustand einnimmt; das Kräftepaar hat lediglich zur Folge, daß der obere Arm 34 unter Zugspannung und der untere Arm 36 unter Druckspannung (oder umgekehrt) gelangt und zwar in Abhängigkeit vom Anstieg oder der Verringerung der Größe des Momentes bei Veränderungen der Bandspannung.

Um die von dem Band 10 auf die Rolle 18 ausgeübte Radialkraft T zu messen, sind auf der Oberseite des Arms 34 Dehnungsmeßstreifen 60, 62 angebracht, und zwar je einer in der Nähe der beiden Armenden, nämlich an den Stellen, an denen der Arm 34 seine maximale Durchbiegung infolge der von dem sich bewegenden Streifen 10 erzeugten Kräfte erfährt. Bei der in Fig. 3 dargestellten Anordnung steht der Dehnungsmeßstreifn 60 dementsprechend unter Biegezugspannung, während der außenliegende Dehnungsmeßstreifen 62 eine Biegedruckspannung mißt. Der ohmsche Widerstand dieser Dehnungsmeßstreifen ist bei der Belastung in unterschiedlichen Richtungen verschieden. Entsprechendes gilt natürlich auch für die Dehnungsmeßstreifen 64, 66, die an dem unteren Arm 36 angeordnet sind.

Wie sich aus Fig. 3 ergibt, sind die beiden Arme 34 und 36 symmetrisch zur Längsachse der Tragwelle 20 bzw. der Flanschachse angeordnet, wobei sie vorzugsweise eine zueinander parallele Lage einnehmen. Die Meßstreifen 60, 62 und 64, 66 sind ebenfalls vorzugsweise symmetrisch an den Armen 34, 36 angebracht. Die symmetrische Anordnung der Arme 34, 36 relativ zur Wellenachse X ist so gewählt, daß die Dehnungsmeßstreifen so miteinander verschaltet werden können, daß die auf die Walze 18 wirkende Kraft unabhängig von der Länge der Tragwelle 20 bestimmt werden kann. Aus Fig. 3 ist ersichtlich, wie die von dem Band auf die Rolle 18 wirkenden Kräfte in ihre einzelnen, auf die Platte 32 wirkenden Komponenten aufgespaltet werden.Die auf die Arme 34, 36 ausgeübten bzw. von diesen aufzunehmenden Kräfte sind:

Ax$_1$ und Ay$_1$ an Punkt A
Bx$_1$ und By$_1$ an Punkt B

Wenn die auf die aus Welle 20 und Platte 32 bestehende, in Fig.3 schraffiert dargestellte Baueinheit wirkenden Kräfte zerlegt werden, ergibt sich als Kräftegleichgewicht zu der schraffiert dargestellten Baueinheit:

In X-Richtung: $Ax_1 = -Bx_1$
In Y-Richtung: $Ay_1 + By_1 = -T$

Daher gilt bei symmetrischer Anordnung und Homogenität der Arme 34, 36:

$$Ay_1 = By_1 = -T/2$$

Das Moment um den Punkt O ist:

$$(Ax_1 + Bx_1) \cdot D = T \cdot L$$

wobei L die (wirksame) Länge der Achse 20 und D die Entfernung vom Punkt O zu der neutralen Faser der Arme 34, 36 ist. Durch Kombination dieser Gleichungen können die Kräfte $Ax_1$ und $Bx_1$ ausgedrückt werden durch:

$$-Ax_1 = Bx_1 = L \cdot T/(2 \cdot D)$$

Anhand der Figuren 4A und 4B lassen sich die Biege- und Druckspannungen des Arms 34 erläutern. Die Biegespannung am Dehnungsmeßstreifen 60 des Arms 34 ist:

$$\sigma_{60} = \frac{F_y \cdot h \cdot t}{2I}$$

Dabei ist $F_y$ die Kraft, die auf die Platte 32 in Richtung der Y-Achse wirkt, t ist die Dicke des Arms 34 und I ist das Trägheitsmoment. Das Trägheitsmoment kann auch ausgedrückt werden als

$$I = t^3 \cdot W/12$$

wobei W die Breite des Arms ist.

Gem. Fig. 4B ist die Druckbeanspruchung im Arm 34

$$\sigma_{60} = \frac{F_x}{S}$$

Dabei ist $F_x$ ist die Kraft, die in Richtung der X-Achse auf die Platte 32 wirkt und S ist die stirnseitige Oberfläche des Arms 34, also das Produkt aus Breite und Dicke t des Arms.

Durch Überlagerung der Belastungsfälle und Kombination der vorstehenden Gleichungen ergeben sich für die von den Meßstreifen 60, 62 ermittelten Belastungen folgende Gleichungen:

Belastung gemessen durch Meßstreifen 60:

$$\sigma_{60} = \frac{A_{y_1} \cdot h \cdot t}{2I} + \frac{A_{x_1}}{S} = \frac{T \cdot h \cdot t}{4I} + \frac{T \cdot L}{2D \cdot S}$$

Belastung gemessen durch Meßstreifen 62:

$$\sigma_{62} = \frac{-A_{y_1} \cdot h \cdot t}{2I} + \frac{A_{x_1}}{S} = \frac{-T \cdot h \cdot t}{4I} + \frac{T \cdot L}{2D \cdot S}$$

wobei $\underline{h}$ die Entfernung ist, in der die Meßgeräte 60 und 62 von der Mitte des Arms 34 entfernt angeordnet sind. Subtrahiert man die beiden Gleichungen voneinander, ergibt sich als Differenz der von beiden Meßstreifen ermittelten Belastungen:

$$\sigma_{60} - \sigma_{62} = \frac{T \cdot h \cdot t}{2I},$$

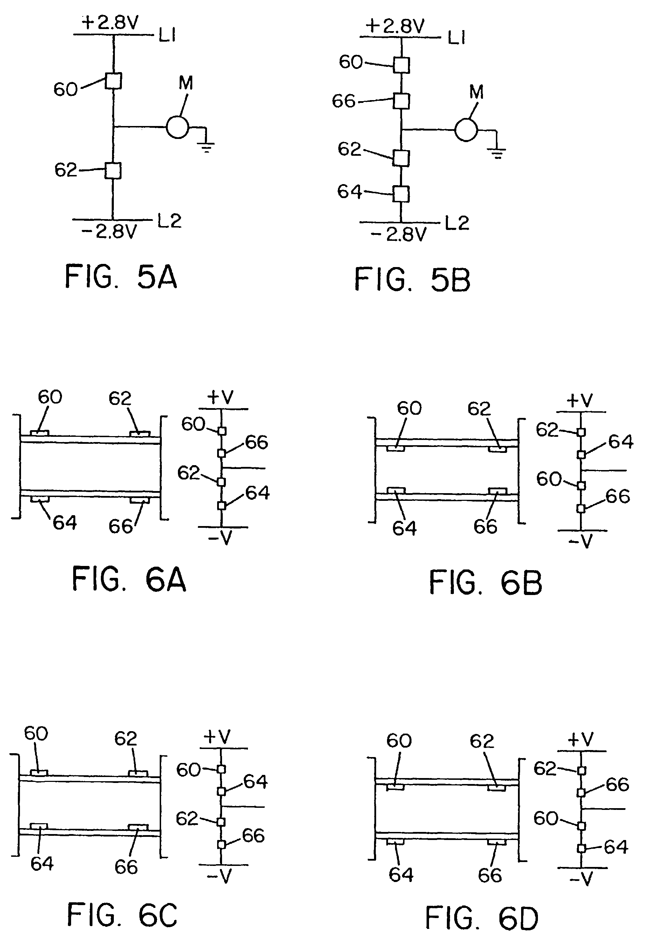

das heißt, die Differenz von $\sigma_{60}$ und $\sigma_{62}$ ist unabhängig von der Länge L der Tragwelle 20. Daher können die Meßstreifen 60, 62 mit einem Anzeigegerät verbunden werden, wie dies in Fig. 5A dargestellt ist, um die Kraft T unabhängig von der Länge der Tragwelle 20 darzustellen.

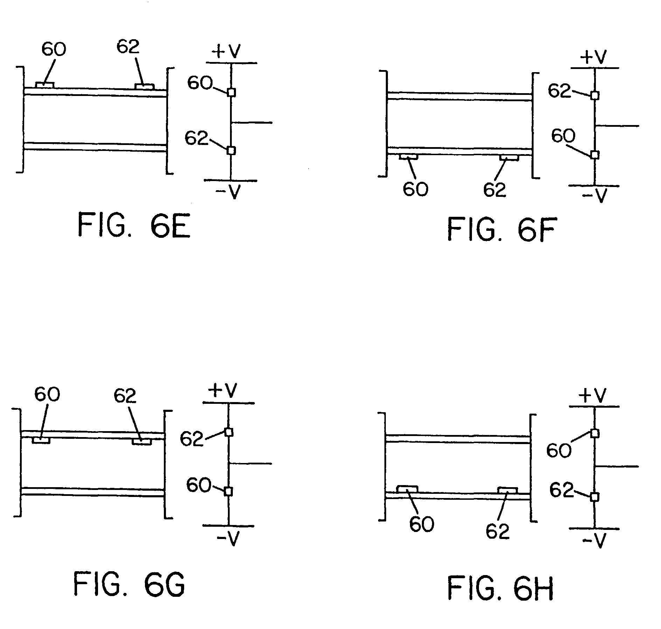

Es ist ersichtlich, daß verschiedene Anordnungen der Meßstreifen möglich sind, wenn wie beschrieben mit zwei Meßstreifen gearbeitet wird. Beispielsweise können bei Verwendung von zwei Meßstreifen beide auch auf dem Arm 36 angeordnet sein. Verschiedene Konfigurationen für die Verwendung von zwei Dehnmeßstreifen und die Positionierung und Verbindung dieser Meßgeräte mit dem Anzeigegerät für die überwachte Kraft T sind in den Fig. 6E bis 6H dargestellt.

Anstelle von zwei können auch vier Dehnungsmeßstreifen verwendet werden, um die Kraft T zu ermitteln, die von dem sich bewegenden Streifen 10 auf die Spannrolle 18 ausgeübt wird. Die von den in Fig. 3 gezeigten Meßgeräten 60, 62, 64 und 66 aufgenommenen Belastungen sind dann

$$\sigma_{60} = \frac{A_{y_1} \cdot h \cdot t}{2I} + \frac{A_{x_1}}{S} = \frac{T \cdot h \cdot t}{4I} + \frac{T \cdot L}{2D \cdot S}$$

$$\sigma_{62} = \frac{-A_{y_1} \cdot h \cdot t}{2I} + \frac{A_{x_1}}{S} = \frac{T \cdot h \cdot t}{4I} + \frac{T \cdot L}{2D \cdot S}$$

$$\sigma_{64} = \frac{-A_{y_1} \cdot h \cdot t}{2I} - \frac{A_{x_1}}{S} = -\frac{T \cdot h \cdot t}{4I} - \frac{T \cdot L}{2D \cdot S}$$

$$\sigma_{66} = \frac{A_{y_1} \cdot h \cdot t}{2I} - \frac{A_{x_1}}{S} = \frac{T \cdot h \cdot t}{4I} - \frac{T \cdot L}{2D \cdot S}$$

Durch Kombination dieser Gleichungen ergibt sich

$$\sigma_{60} + \sigma_{66} = -(\sigma_{62} + \sigma_{64}) = \frac{T \cdot h \cdot t}{2I}$$

$$(\sigma_{60} + \sigma_{66}) - (\sigma_{62} + \sigma_{64}) = \frac{T \cdot h \cdot t}{I},$$

das heißt, daß auch hier die Differenz von $(\sigma_{60} + \sigma_{66})$ und $(\sigma_{62} + \sigma_{66})$ unabhängig von der Länge L der Tragwelle 20 ist. Die vier Meßstreifen können daher, wie in Fig. 5B gezeigt, an ein Anzeigegerät angeschlossen werden, das die Kraft T unabhängig von der Länge der Unterstützungswelle 20 darstellt. Wie schon bei der Verwendung von lediglich zwei Meßstreifen können auch bei vier Meßelementen viele verschiedene Anordnungen von diesen gewählt werden. Einige Beispiele hierfür und der Anschluß dieser vier Meßstreifen an der Anzeigeeinrichtung sind in den Fig. 6A bis 6D dargestellt. Die Anordnung von vier Meßgeräten kommt vorzugsweise dort zum Einsatz, wo eine besonders hohe Genauigkeit bei der Messung der Kraft T gefordert wird.

Die entsprechend den Fig. 2 und 6A angeordneten Dehnungsmeßstreifen sind gem. Fig. 5A in einen Schaltkreis so geschaltet, daß bei einer Änderung der Widerstände der Dehnungsmeßstreifen 60, 62, 64, 66 infolge einer Veränderung der Biegebelastung eine Anzeige an dem Anzeigegerät M ausgegeben wird, das ebenfalls an den Schaltkreis angeschlossen ist. Der Schaltkreis wird an diagonal gegenüberliegenden Punkten von einer geeigneten Gleichstrom- oder Wechselstromversorgung über die Leitungen L1, L2 mit Energie gespeist. Selbstverständlich können auch elektrische Verstärkungseinrichtungen (nicht dargestellt) anstelle der Anzeigeeinrichtung M eingesetzt werden, die dann Servomotoren od.dgl. ansteuern können, um die Streifenspannung in Abhängigkeit von dem gemessenen Wert einzustellen.

Durch die erfindungsgemäße Zwillings- oder Doppelbalkenanordnung und die zur Verwendung kommende Schaltung der Dehnungsmeßstreifen in der besonderen Art und Weise ist es möglich, einen konsolenartig ausgeschalteten Meßwertaufnehmer zu schaffen, der die von einem Streifen auf eine Welle ausgeübten Kräfte mißt, wobei die Messung der Kräfte unabhängig von der Länge der Welle erfolgt. Mit der Erfindung ist es möglich, die von Dehnungsmeßstreifen ebenfalls erfaßten Momentenbelastungen vollständig zu eliminieren, wodurch es unerheblich wird, Wo die Radialkraft an der länglichen Welle tatsächlich angreift. Die Kraftangriffsstelle der von dem Streifen infolge dessen Spannung resultierenden Kraft hat also keinen Einfluß auf die Bestimmung der auf die Welle wirkenden Radialkraft T. Daher erzeugt eine Last derselben Größe und Richtung an jedem Angriffspunkt entlang der Welle denselben Ausgabewert.

Es ist durch die vorstehende Beschreibung ersichtlich, daß mit der Erfindung eine die Bandspannung ermittelnde bzw. messende Einrichtung oder ein Meßwertaufnehmer geschaffen wird, die bzw. der besonders einfach aufgebaut ist und aus Bauelementen besteht, die einfach und preiswert herzustellen bzw. zu beschaffen sind, die keine schwierigen Herstellungsschritte erfordern und die leicht zu montieren und zu demontieren sind.

Darüber hinaus ist das erfindungsgemäße Streifenspannungsmeßgerät insbesondere bei Verwendung der bevorzugten Doppelbalkenanordnung gekennzeichnet durch seine außergewöhnlich geringe Hysterese bei seinem elektrischen Ansprechverhalten, so daß das Gerät besonders geeignet für den Einsatz nicht nur bei den üblichen Anwendungsfällen ist, sondern auch dort zum Einsatz kommen kann, wo besonders genaue Kräftemessungen erforderlich sind. Dabei sind die Messungen der Bandspannung mit der erfindungsgemäßen Einrichtung auch über eine lange Gebrauchszeitspanne hinweg außergewöhnlich genau.

Die besondere Ausgestaltung der Erfindung gestattet es, den erfindungsgemäßen Meßwertaufnehmer für eine Vielzahl von Wellen unterschiedlicher Längen und Durchmesser zu verwenden. Vorzugsweise hat die Sensoranordnung eine Standardmontageseite, an der Wellen verschiedener Größen unter Verwendung von Adaptern angeschlossen werden können, die hierzu vorzugsweise an der Montagefläche auswechselbar befestigt sind. Der Sitz der Welle bzw. Achse in dem Adapter sollte einerseits eng genug sein, um jede Bewegung der Welle während des Gebrauchs zu verhindern, andererseits aber auch gleichzeitig lose genug sein, um ein Einsetzen der Welle bzw. Achse in den Adapter ohne Schwierigkeiten zu erlauben. Das Gehäuse für die erfindungsgemäße Sensoranordnung hat vorzugsweise eine rund Form und wird zweckmäßig mit Flanschen, lagerartigen Befestigungen oder Bolzen befestigt. Die elektrische Verbindung zu den Sensoren ist vorzugsweise entweder an einem Ende oder an einer Seite des Meßwertaufnehmers angeordnet, abhängig von der Art der gewählten Befestigung. Im Inneren des Gehäuses der Sensoranordnung ist vorzugsweise ausreichend Platz, um die Schaltelektronik und weitere Komponenten aufzunehmen. Einige der besonderen Vorteile der erfindungsgemäßen Sensoranordnung sind:

- er mißt die Querkraftbelastung auf einer einseitig eingespannte Rolle weitgehend unabhängig von Einflüssen ebenfalls vorhandener Momentenbelastung;

- er ist in der Lage, die Spannung von Bändern bzw. Streifen zu bestimmen, die um die Abtastwalze laufen;

- er ist weitgehend unempfindlich gegenüber der Position eines schmalen Bandes bzw. Streifens, das um eine breite Abtastrolle umgelenkt wird;

- er kann unter Verwendung von Standardwellenadaptern für eine große Anzahl unterschiedlicher Wellen bzw. Achsen eingesetzt werden;

- er hat spezifische "Neigungs"-Werte, die von dem unter Belastung sich biegenden Ausleger verursacht werden;

- er hat eine besonders dauerhafte Konstruktion;

- er ist mit einem eigenen Überlastanschlag versehen;

- er erzeugt lineare Hochpegelausgabesignale;

- er erzeugt ein hochfrequentes Antwortsignal;

- er ist in einem weiten Temperaturbereich betriebsfähig;

- er ist korrisionsbeständig;

- er ist modular aufgebaut und kann auf viele verschiedene Arten befestigt werden; und

- er ist leicht auf die Richtung der eingeleiteten Kraft ausrichtbar.

Die Erfindung ist nicht auf das beschriebene Ausführungsbeispiel und die erwähnten Modifikationen beschränkt, sondern es ergeben sich viele Änderungen und Ergänzungen, ohne den Rahmen der Erfindung zu verlassen.

**Patentansprüche**

1.    Meßaufnehmereinrichtung zum Ermitteln der auf eine Welle oder Achse einer bestimmten Länge wirkenden Radialkräfte, mit einer an einem Tragrahmen auskragend angeordneten, biegbaren Balkenelementanordnung, die in Richtung auf ein Ende der Welle bzw. Achse vorragt und mit einer an der Balkenelementanordnung befestigten Dehnungsmeßelementanordnung, **dadurch gekennzeichnet, daß** die Balkenelementanordnung (30, 32, 34, 36) mindestens zwei zur Achse (X) der Welle (18) bzw. Achse (20) ausgerichtete Meßbalken (34, 36) aufweist und die Dehnungsmeßelementanordnung mindestens zwei Dehnungsmeßfühler (60, 62) hat, von denen wenigstens einer an einem der Meßbalken (34 bzw. 36) angeordnet ist, wobei die Dehnungsmeßelementanordnung elektrisch so geschaltet ist, daß die auf die Welle bzw. Achse wirkenden Radialkräfte unabhängig von deren Länge bestimmbar sind.

2. Einrichtung nach Anspruch 1, **dadurch gekennzeichnet, daß** die Meßbalken (34, 36) im wesentlichen parallel zueinander angeordnet sind.

3. Einrichtung nach Anspruch 1 oder 2, **dadurch gekennzeichnet, daß** die Meßbalken (34, 36) im wesentlichen symmetrisch zur Achse (X) der Welle (18) bzw. Achse (20) angeordnet sind.

4. Einrichtung nach einem der Ansprüche 1 bis 3, **dadurch gekennzeichnet, daß** die beiden Dehnungsmeßfühler (60, 62) an einem der beiden Meßbalken (34 bzw. 36) angeordnet sind.

5. Einrichtung nach einem der Ansprüche 1 bis 4, **dadurch gekennzeichnet, daß** die beiden Dehnungsmeßfühler (60, 62) im wesentlichen symmetrisch über die Länge des Meßbalkens (34 bzw. 36) an diesem angeordnet sind.

6. Einrichtung nach einem der Ansprüche 1 bis 5, **dadurch gekennzeichnet, daß** ein an einem der Meßbalken (34 oder 36) angeordneter Dehnungsmeßfühler (60 bzw. 62) mit einem zweiten, am anderen Meßbalken (36 oder 34) angeordneten Dehnungsmeßfühler (64 bzw. 66) in Reihe geschaltet ist.

7. Einrichtung nach einem der Ansprüche 1 bis 6, **dadurch gekennzeichnet, daß** die Dehnungsmeßelementanordnung vier Dehnungsmeßfühler (60, 62, 64, 66) aufweist, von denen zwei Meßelemente (60, 62) an dem einen Meßbalken (34) und die anderen beiden Meßelemente (64, 66) an dem anderen Meßbalken (36) angeordnet sind.

8. Einrichtung nach einem der Ansprüche 1 bis 7, **dadurch gekennzeichnet, daß** die Meßbalken (34, 36) aus etwa plattenförmigen Bauelementen bestehen, die an ihren stirnseitigen Enden einerseits mit einer am Tragrahmen (12) festgelegten, festen Endplatte (30) und andererseits an einer beweglichen Endplatte (32) befestigt sind, wobei die bewegliche Endplatte (32) ein Auflager (50) für die Achse (20) bzw. Welle bildet oder trägt.

9. Einrichtung nach einem der Ansprüche 1 bis 8, **dadurch gekennzeichnet, daß** die Balkenelementanordnung (30, 32, 34, 36) in einer am Tragrahmen (12) angeordneten, etwa becherartigen Aufnahme (40) angeordnet ist.

10. Einrichtung nach einem der Ansprüche 1 bis 9, **dadurch gekennzeichnet, daß** die bewegliche Endplatte (32) einen Durchmesser bzw. eine Höhe hat, die kleiner ist als die Öffnungsweite der Aufnahme (40) im Bereich der beweglichen Endplatte (32).

11. Einrichtung nach einem der Ansprüche 1 bis 10, **dadurch gekennzeichnet, daß** die Dehnungsmeßfühler (60, 62, 63, 64) an der Oberseite und/oder der Unterseite der Meßbalken (34, 36) angeordnet sind.

12. Einrichtung nach einem der Ansprüche 1 bis 11, **dadurch gekennzeichnet, daß** sich die Meßbalken (34, 36) im wesentlichen in Längsrichtung der Wellenachse (X) parallel zu dieser erstrecken.

FIG. 1

FIG. 2

FIG. 3

FIG. 4A

FIG. 4B

FIG. 5A

FIG. 5B

FIG. 6A

FIG. 6B

FIG. 6C

FIG. 6D

FIG. 6E

FIG. 6F

FIG. 6G

FIG. 6H

EP 0 949 493 A1

Europäisches
Patentamt

**EUROPÄISCHER RECHERCHENBERICHT**

Nummer der Anmeldung

EP 98 12 2886

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X<br>Y | US 4 130 014 A (EDDENS GERALD R)<br>19. Dezember 1978<br>* Zusammenfassung; Abbildungen 1,6,12 *<br>* Spalte 3, Zeile 54 - Spalte 7, Zeile 34<br>* | 1-5,8-12<br><br>6,7 | G01L1/22<br>G01L5/00<br>G01L5/10 |
| Y<br>A | EP 0 299 806 A (ISHIDA SCALE MFG CO LTD)<br>18. Januar 1989<br>* Zusammenfassung; Abbildungen 1,3 *<br>* Spalte 1, Zeile 3 - Spalte 1, Zeile 23 *<br>* Spalte 3, Zeile 44 - Spalte 3, Zeile 65<br>* | 6,7<br><br>1-5,8-12 | |
| A | "Handbuch der Sensortechnik - Messen mechanischer Grössen"<br>1990 , DIETRICH JUCKENACK , LANDSBERG/LECH<br>XP002108994<br>* Seite 353 - Seite 381; Abbildung 6.5.10<br>* | 1-12 | |

RECHERCHIERTE SACHGEBIETE (Int.Cl.6)

G01L
G01G

Der vorliegende Recherchenbericht wurde für alle Patentansprüche erstellt

| Recherchenort | Abschlußdatum der Recherche | Prüfer |
|---|---|---|
| MÜNCHEN | 13. Juli 1999 | Helm, B |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 98 12 2886

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-07-1999

| Im Recherchenbericht angeführtes Patentdokument | Datum der Veröffentlichung | Mitglied(er) der Patentfamilie | Datum der Veröffentlichung |
|---|---|---|---|
| US 4130014 A | 19-12-1978 | US RE31312 E | 19-07-1983 |
| EP 0299806 A | 18-01-1989 | JP 1021323 A | 24-01-1989 |
| | | JP 2683633 B | 03-12-1997 |
| | | JP 1021324 A | 24-01-1989 |
| | | DE 3879303 A | 22-04-1993 |
| | | KR 9701610 B | 11-02-1997 |
| | | US 4951765 A | 28-08-1990 |

EPO FORM P0461

Für nähere Einzelheiten zu diesem Anhang : siehe Amtsblatt des Europäischen Patentamts, Nr. 12/82